Europäisches Patentamt

**European Patent Office**

Office européen des brevets

(19)

(11) Veröffentlichungsnummer: **0 041 113**
**B1**

(12) # EUROPÄISCHE PATENTSCHRIFT

(45) Veröffentlichungstag der Patentschrift:
**30.11.83**

(51) Int. Cl.³: **C 04 B 3/00,** C 01 F 5/08,
F 27 B 7/20

(21) Anmeldenummer: **81102439.7**

(22) Anmeldetag: **31.03.81**

(54) **Verfahren und Anlage zur Herstellung von Sintermagnesit aus Magnesiumhydroxid.**

(30) Priorität: **02.06.80 DE 3020881**

(43) Veröffentlichungstag der Anmeldung:
**09.12.81 Patentblatt 81/49**

(45) Bekanntmachung des Hinweises auf die Patenterteilung:
**30.11.83 Patentblatt 83/48**

(84) Benannte Vertragsstaaten:
**AT DE GB IT NL**

(56) Entgegenhaltungen:
**DE - A - 2 558 410**
**DE - A - 2 819 038**
**DE - A - 2 833 774**
**DE - B - 1 191 733**
**GB - A - 838 858**
**US - A - 4 033 778**

(73) Patentinhaber: **Krupp Polysius AG,**
**Graf-Galen-Strasse 17, D-4720 Beckum (DE)**

(72) Erfinder: **Schulte, Hans-Gerd, Dipl.-Ing.,**
**Riggenstrasse 14, D-4722 Ennigerloh (DE)**

(74) Vertreter: **Tetzner, Volkmar, Dr.-Ing. Dr. Jur.,**
**Van-Gogh-Strasse 3, D-8000 München 71 (DE)**

## Verfahren und Anlage zur Herstellung von Sintermagnesit aus Magnesiumhydroxid

Die Erfindung betrifft ein Verfahren sowie eine Anlage zur Herstellung von Sintermagnesit aus Magnesiumhydroxid, wobei zunächst eine Magnesiumhydroxid-Suspension durch Filtration entwässert wird, das so gewonnene Aufgabegut in einer Wärmebehandlungszone calciniert wird, der so gewonnene Kauster unter Druck brikettiert wird und die Briketts schließlich in einer Sinterzone bei einer Temperatur von 1800 bis 2000° C gesintert werden.

Ein Verfahren der vorstehend genannten Art ist aus der US-A-4 033 778 bekannt. Hierbei wird der Filterkuchen in einem Etagenofen calciniert. Dabei zerfällt der Filterkuchen sehr feinkörnig, und zwar zum großen Teil bis auf Primärkorngröße ($<1 \mu m$). Die anschließende Brikettierung dieses extrem feinen Pulvers erfordert einen sehr hohen Energieaufwand. Nachteilig ist ferner der hohe Wärmeverbrauch dieses bekannten Verfahrens sowie die schlechte Steuerbarkeit des Calciniervorganges in einem Etagenofen. Durch die unvermeidlich lange Verweilzeit des Kausters bei Temperaturen über 800° C beginnt eine Fusion von Kristalliten, was die spätere Sinterung negativ beeinflußt.

Es ist weiterhin bekannt (GB-A-835 858), aus Magnesiumhydroxid gewonnenen Filterkuchen zu trocknen und durch Knetung zu verdichten, ehe man ihn in einem einstufigen Brennverfahren in einem Drehrohrofen calciniert und sintert.

Es ist ferner bekannt (DE-A-2 819 038 und 2 558 410), Sintermagnesit aus Magnesiumkarbonat in einem Verfahren herzustellen, bei dem das pulverförmige Rohmaterial zunächst in einem Schwebegaswärmetauscher calciniert wird, der Kauster anschließend heißbrikettiert wird und die Briketts im heißen Zustand in die Sinterzone eingetragen werden. Versucht man jedoch, dieses letztere Verfahren auf die Herstellung von Sintermagnesit aus Magnesiumhydroxid zu übertragen, so stellen sich unerwartet große Schwierigkeiten ein. Wird üblicher Filterkuchen (mit einem Raumgewicht von ca. 1 g/cm³) einer Mahltrocknung unterworfen, so ergibt sich ein extrem feines Mehl, dessen anschließende Behandlung in einem Schwebegaswärmetauscher ausgeschlossen ist. Es erweist sich andererseits als außerordentlich schwierig und mit vertretbarem Aufwand nicht durchführbar, das bei der Mahltrocknung gewonnene pulverförmige Gut zu verdichten, ehe es dem Schwebegaswärmetauscher aufgegeben wird.

Der Erfindung liegt daher die Aufgabe zugrunde, unter Vermeidung dieser Mängel ein Verfahren der eingangs genannten Art zu entwickeln, das sich durch eine hohe Wärmewirtschaftlichkeit auszeichnet und die Herstellung eines gut sinterbaren, hochreaktiven Kausters mit einer für die Brikettierung günstigen Kornverteilung und einer großen Variationsbreite der spezifischen Oberfläche des Kausters gestattet. Das erfindungsgemäße Verfahren soll ferner mit einer einfach aufgebauten und störungsfrei arbeitenden Anlage durchführbar sein.

Diese Aufgabe wird erfindungsgemäß durch folgende Merkmale gelöst:

a) Es wird zunächst ein mechanisch festes Aufgabegut mit einem Feuchtegehalt unter dem Thixotropiewert und mit einem Raumgewicht zwischen 1,3 und 1,4 g/cm³ erzeugt;

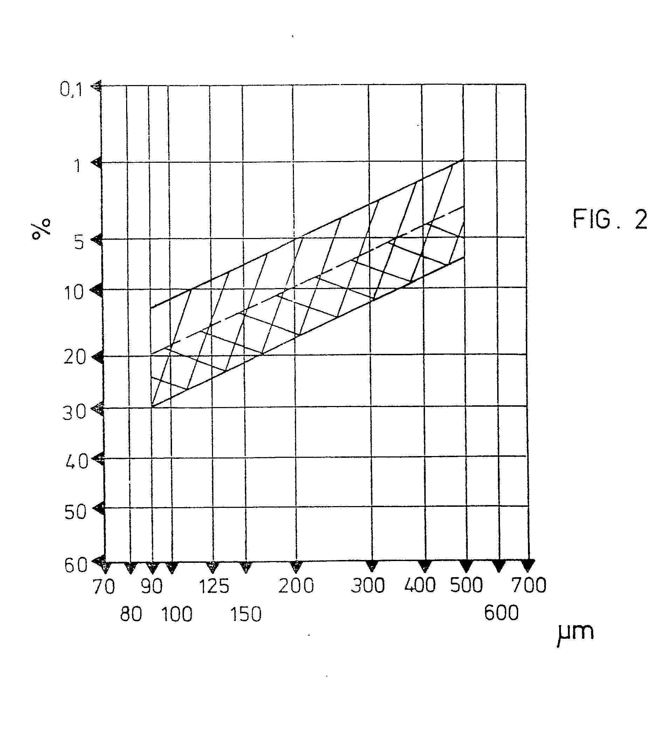

b) dieses Aufgabegut wird anschließend in einer Mahltrocknungsstufe im Heißluftstrom getrocknet und gleichzeitig so zerkleinert, daß die Kornverteilung im schraffierten Bereich des Körnungsnetzes gemäß Fig. 2 liegt;

c) das durch Trocknung und Zerkleinerung gewonnene pulverförmige Gut wird dann in einem Schwebegaswärmetauscher mit den heißen Abgasen der Sinterzone erhitzt und durch eine dosierte Zufuhr von zusätzlichem Brennstoff im Gasstrom bei kurzer Verweilzeit und einer Temperatur zwischen 650 und 1050° C calciniert;

d) der Kauster wird bei einer Temperatur von 400 bis 800° C heißbrikettiert und die so gewonnenen Briketts werden im heißen Zustand in die Sinterzone eingetragen.

Wesentlich für die erfindungsgemäße Lösung ist damit, daß der Mahltrocknungsstufe ein bis zu einem bestimmten Grade verdichtetes und verfestigtes Material aufgegeben wird. Hierdurch lassen sich — wie Versuche zeigten — der störende Zerfall des Aufgabegutes bei der Mahltrocknung und damit auch die hiermit verbundenen Schwierigkeiten im Schwebegaswärmetauscher vermeiden.

Um die Mahltrocknung des Filterkuchens durchführen und damit die für die Kausterung erforderliche Feinheit einstellen zu können, muß ein mechanisch festes Aufgabegut mit einem Feuchtegehalt unter dem Thixotropiewert und mit einem Raumgewicht zwischen 1,3 und 1,4 g/cm³ erzeugt werden (Feuchtegehalt unter dem Thixotropiewert bedeutet, daß sich das Aufgabegut durch eine Schlag- oder Stoßwirkung, wie sie beispielsweise bei der Zerkleinerung durch ein Schlagwerk auftritt, nicht verflüssigen darf).

Dieses mechanisch feste Aufgabegut kann durch Grobzerkleinerung von mittels Röhrenfilter-Druckfiltration gewonnenem Filterkuchen auf eine Stückgröße <100 mm erzeugt werden. Wie Versuche zeigten, ist es jedoch auch möglich, dieses Aufgabegut durch Vermischen von mittels Saugfiltration oder Rahmenfilter-Druckfiltration gewonnenem Filterkuchen mit getrocknetem oder teilgetrocknetem, feinkörnigen Magnesiumhydroxid herzustellen; diese Vermischung erfolgt vorzugsweise in einem Zwangsmischer mit knetend-reibender Behandlung.

Bei der Mahltrocknung muß eine definierte, für den folgenden Calcinierprozeß günstige Kornverteilung erreicht werden, und zwar muß die Kornverteilung im schraffierten Bereich des in Fig. 2 dargestellten Körnungsnetzes liegen, vorzugsweise in dem kreuzschraffierten Feld. Bei größerer Feinheit verschlechtert sich das Fließverhalten des Gutes in dem zur Erhitzung und Calcinierung verwendeten Schwebegaswärmetauscher, und es kommt zu Staubansätzen und Materialstauungen in den Gasleitungen und Zyklonen. Bei gröberer Vermahlung werden andererseits die Bedingungen für den Wärmeübergang wesentlich ungünstiger, was zu höherem Wärmeverbrauch und gleichzeitig zu geringerem Calcinierungsgrad führt. Da nämlich der sehr große Porenraum den Wärmeübergang in das Teilcheninnere stark bremst, wird bei zu großen Teilchen der Kern nicht in gewünschtem Maße calciniert.

Die exakte Einstellung und Einhaltung der bei der Mahltrocknung erzielten Feinheit ist also nicht nur für das Fließverhalten des Materiales im folgenden Wärmetauschersystem von großer Wichtigkeit, sondern zugleich eine entscheidende Voraussetzung für eine dosierte Wärmebeaufschlagung bei der Calcinierung. Letzteres ist zur Erhaltung der Primärkorngröße und Primärkornform unbedingt erforderlich, um eine einwandfreie Sinterung zu gewährleisten.

Bei dem erfindungsgemäßen Verfahren wird das durch Trocknung und Zerkleinerung gewonnene pulverförmige Gut mit den heißen Abgasen der Sinterzone erhitzt und durch eine dosierte Zufuhr von zusätzlichem Brennstoff im Gasstrom bei kurzer Verweilzeit und einer Temperatur zwischen 650 und 1050° C calciniert. Durch Variation der Calciniertemperatur ergibt sich eine sehr hohe Flexibilität hinsichtlich der Einstellung der spezifischen Oberfläche. So können beispielsweise mit einer Calciniertemperatur von 650° C Kauster mit einer extrem großen spezifischen Oberfläche von 30 bis 50 m²/g erzeugt werden, die außerordentlich gute Sintereigenschaften aufweisen (diese Kauster können im brikettierten Zustand bei niedrigeren Temperaturen und kürzeren Verweilzeiten zu sehr hohen Dichten gesintert werden). Eine Steigerung der Calciniertemperatur beispielsweise auf über 1000° C ergibt andererseits eine verhältnismäßig kleine spezifische Oberfläche (etwa von 1 m²/g). Derartige Kauster mit einer kleinen spezifischen Oberfläche können von Vorteil sein, wenn sie nicht für die Sintererzeugung verwendet werden. Das erfindungsgemäße Verfahren ermöglicht es somit, durch entsprechende Wahl der Calciniertemperatur Kauster mit einer dem jeweiligen Verwendungszweck angepaßten spezifischen Oberfläche herzustellen.

Das erfindungsgemäße Verfahren ist jedoch nicht nur hinsichtlich der Höhe der Calciniertemperatur, sondern auch bezüglich der übrigen thermischen Bedingungen bei der Kausterung sehr flexibel. So kann die Wärmebeaufschlagung bei der Kausterung weitgehend den spezifischen Eigenschaften des Magnesiumhydroxids angepaßt werden, die im wesentlichen aus den Herstellungsbedingungen bei der Fällung des Mg(OH)₂ resultieren.

Bei einigen Magnesiumhydroxiden kann außer der Einstellung einer bestimmten Mehlfeinheit bei der Mahltrocknung eine etwas abweichende Art der Wärmebeaufschlagung im Zyklonwärmetauscher, insbesondere im Calcinierteil, von Vorteil sein. So muß bei bestimmten Kaustern die Kausterung schockartig durchgeführt werden.

Als besonders vorteilhaft hat es sich erwiesen, wenn das durch Trocknung und Zerkleinerung gewonnene pulverförmige Gut in einem zweistufigen Zyklonwärmetauscher mit den heißen Abgasen der Sinterzone erhitzt wird. Gegenüber der Verwendung eines dreistufigen Zyklonwärmetauschers ergibt sich in einem zweistufigen Zyklonwärmetauscher eine wesentlich geringere mechanische Beanspruchung des pulverförmigen Gutes und damit weniger Feinkornbildung. Dadurch werden die Fließeigenschaften des pulverförmigen Gutes verbessert und Gefahren eines pulsierenden Materialflusses oder gar Verstopfungen vermieden. Wärmewirtschaftliche Nachteile durch die Verwendung eines lediglich zweistufigen Zyklonwärmetauschers treten nicht ein, da bei dem erfindungsgemäßen Verfahren die Abgase des Zyklonwärmetauschers für die Trocknung des Filterkuchens benutzt werden.

Das erfindungsgemäße Verfahren zeichnet sich damit durch wesentliche Vorteile gegenüber den bisher bekannten Lösungen aus:

Der Wärmeverbrauch für die Trocknung, Kausterung und Sinterung liegt um 40 bis 60% niedriger als beim Stand der Technik. Durch den bei der Mahltrocknung erzielten günstigen Kornaufbau des Kausters wird die Kompaktierung erleichtert, und es lassen sich bei Temperaturen von 400 bis 800° C, vorzugsweise 600 bis 750° C, durch Heißbrikettierung des Kausters Briketts von hoher mechanischer Festigkeit erzielen. Die extrem kurze Verweilzeit des Gutes im Calcinator bei einer Temperatur zwischen 650 und 1050° C ergibt dabei einen hochreaktiven, optimal sinterbaren Kauster mit einer in weiten Grenzen wählbaren spezifischen Oberfläche.

Der bei dem erfindungsgemäßen Verfahren ermöglichte Eintrag der Briketts im heißen Zustand in die Sinterzone vermeidet eine Versprödung der Briketts durch Abkühlung. Die Briketts behalten daher ihre hohe mechanische Widerstandsfähigkeit, so daß der im Ofen durch Abrieb und Brikettzerfall entstehende Feinanteil auf ein Minimum reduziert und der Sinterbetrieb verbessert wird. Zugleich wird durch den Heißeintrag die Verweilzeit der Agglomerate im Ofen bis zur Erreichung der Sintertemperatur erheblich verkürzt. Das Material behält seine hohe Reaktivität nahezu unvermindert bis zum Erreichen der Temperaturzone, bei der die Rekristallisation mit hoher Geschwindigkeit abläuft. Dadurch ist die Erzielung hoher Sinterdichten leichter möglich als bei einer Chargierung der Briketts im kalten Zustand.

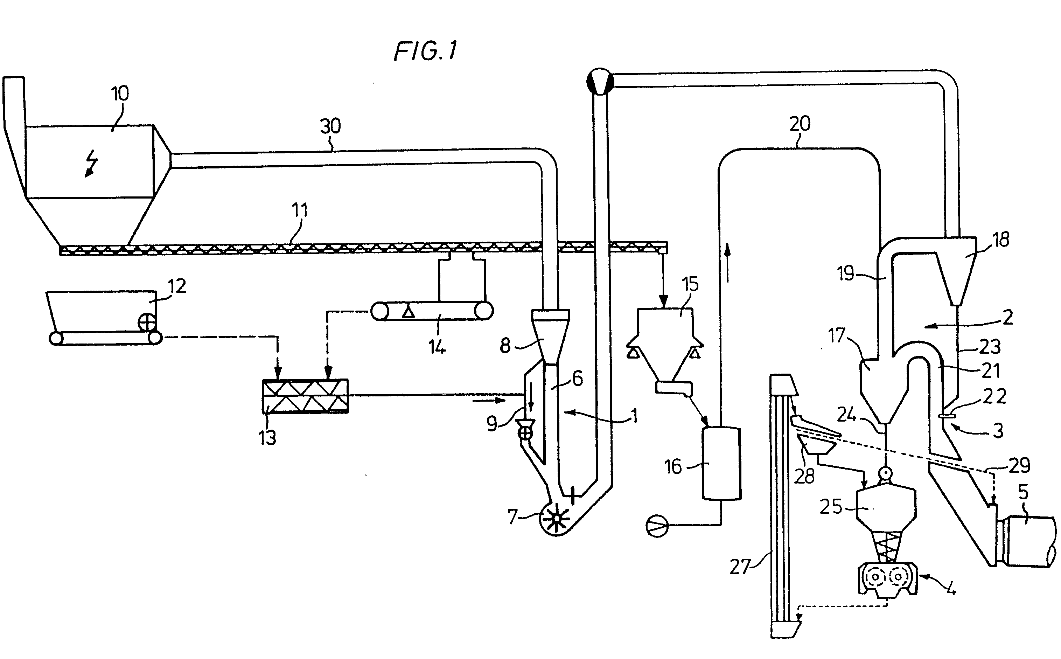

Eine Anlage zur Durchführung des erfindungsgemäßen Verfahrens ist in Fig. 1 schematisch veranschaulicht.

Die Anlage enthält eine Mahltrocknungsstufe 1, einen zweistufigen Zyklonwärmetauscher 2 mit einem Calcinator 3, eine Brikettierpresse 4 sowie einen die Sinterzone bildenden Drehrohrofen 5.

Die Mahltrocknungsstufe 1 enthält einen von heißen Abgasen des Zyklonwärmetauschers 2 durchströmten vertikalen Trocknungsschacht 6, einen am unteren Schachtende angeordneten Desintegrator (Schlagwerk) 7 und einen im oberen Schachtbereich angeordneten Abscheider 8, der über eine Rückführleitung 9 mit dem Desintegrator 7 in Verbindung steht.

Dem Abscheider 8 ist ein Elektrofilter 10 nachgeschaltet, dessen Abscheidegut über eine Förderschnecke 11 in das System zurückgeführt wird. Filterkuchen (von einer nicht dargestellten Filtrationseinrichtung) wird über einen Kastenbeschicker 12 einem Mischer 13 zugeführt, der andererseits feinkörniges getrocknetes Magnesiumhydroxid über die Förderschnecke 11 und eine Dosierbandwaage 14 erhält.

Die Förderschnecke 11 führt im übrigen das durch Trocknung und Zerkleinerung gewonnene pulverförmige Gut einem Dosierbunker 15 zu, dem ein pneumatischer Senkrechtförderer 16 nachgeschaltet ist. Durch diesen Senkrechtförderer 16 wird das Gut dem zweistufigen Zyklonwärmetauscher 2 zugeführt, der einen unteren Zyklon 17 und einen oberen Zyklon 18 enthält. Der Zyklon 17 steht mit dem Zyklon 18 über eine Gasleitung 19 in Verbindung, in die die vom pneumatischen Senkrechtförderer 16 kommende Gutleitung 20 einmündet.

Der Drehrohrofen 5 steht mit dem unteren Zyklon 17 des zweistufigen Wärmetauschers 2 über eine schwanenhalsähnlich geformte Gasleitung 21 in Verbindung, in der wenigstens ein Brenner 22 vorgesehen ist und die den Calcinator 3 bildet. Die Gutaustragsleitung 23 des Zyklons 18 mündet in diese Gasleitung 21 in der Nähe des Brenners 22. Die Gutaustragsleitung 24 des Zyklons 17 mündet in einen thermisch isolierten Zwischenbehälter 25.

Unterhalb des Zwischenbehälters 25 ist die Brikettierpresse 4 angeordnet. Ein Heißgutbecherwerk 27 fördert die Briketts zu einer Siebeinrichtung 28, von der der Siebdurchfall zum Zwischenbehälter 25 zurückgeleitet wird, während die Briketts über die gestrichelt (schematisch) angedeutete Verbindung 29 zum Drehrohrofen 5 gelangen.

Die Funktion der Anlage ist wie folgt:

In der Mahltrocknungsstufe 1 wird der Filterkuchen durch die heißen Abgase des Zyklonwärmetauschers 2 getrocknet und gleichzeitig durch den Desintegrator 7 zerkleinert. Hierbei gelangt der Filterkuchen durch den vertikalen Trocknungsschacht 6 jeweils in den Abscheider 8. Die dort abgeschiedene Grobfraktion fällt über die Leitung 9 zurück in den Desintegrator und wird erneut (evenuell wiederholt) durch den Trocknungsschacht 6 dem Abscheider 8 zugeführt. Die Feinfraktion des Filterkuchens wird durch die den Abscheider 8 verlassenden Trocknungsgase über die Gasleitung 30 dem Elektrofilter 10 zugeführt, hier abgeschieden und gelangt dann über die Förderschnecke 11 in den Dosierbunker 15.

Das durch Trocknung und Zerkleinerung gewonnene pulverförmige Gut (Magnesiumhydroxid) wird durch den pneumatischen Senkrechtförderer 16 dem zweistufigen Zyklonwärmetauscher 2 zugeführt. Es wird zunächst in die Gasleitung 19 eingetragen und von den heißen Gasen (unter gleichzeitiger Erhitzung) dem Zyklon 18 zugeführt. Nach Abscheidung gelangt es über die Gutaustragsleitung 23 in den Calcinator 3 (Gasleitung 21), wo durch den Brenner 22 eine zusätzliche Wärmezufuhr erfolgt. Das Gut bleibt damit eine definierte, kurze Zeit im Temperaturbereich zwischen 650 und 1050° C und wird von den Abgasen des Drehrohrofens 5 dem Zyklon 17 zugeführt. Das hier abgeschiedene, calcinierte Gut gelangt über den isolierten Zwischenbehälter 25 mit einer Temperatur von ca. 700 bis 800° C in die Brikettierpresse 4. Nach Abtrennung des Feinanteils in der Siebeinrichtung 28 gelangen die Briketts mit etwa 500 bis 700° C in den die Sinterzone bildenden Drehrohrofen 5.

Zur weiteren Erläuterung der Erfindung dienen folgende Beispiele:

Beispiel 1

Filterkuchen mit einem MgO-Gehalt von 98,3% (bezogen auf glühverlustfrei) und einem Feuchtegehalt von 38%, erhalten aus einer Rahmenfilterpresse, wurde mit feinkörnigem, teilgetrocknetem $Mg(OH)_2$ (Feuchte 2%), welches als Grobkomponente aus dem Abscheider des Schachttrockners stammte, in einem Walzenkollergang zu einem festen, plattigen Produkt verarbeitet. Die beiden Komponenten wurden in einem Mengenverhältnis von 87,5% feuchten Filterkuchens und 12,5% teilgetrockneten $Mg(OH)_2$ vermischt. Das im Walzenkoller gemischte Material lag in Form von Plättchen mit einer Stärke von ca. 1 bis 20 mm vor und wies eine Mischfeuchte von 33,5% auf. Bei diesem Feuchtigkeitsgehalt war das Material nicht mehr thixotrop. Die Trocknung und Zerkleinerung erfolgten in einem Fallschachttrockner, der von 410° C heißen Gasen (Abgase des Zyklonwärmetauschers) durchströmt wurde. Die Zerkleinerung des plattigen Trocknungsgutes in dem vom Heißgas durchströmten Schlagwerk lieferte ein Mehl folgender Körnung:

Rückstand 0,5 mm  =   4%
Rückstand 0,2 mm  =   17%
Rückstand 0,09 mm  =  26%

Das im Elektrofilter abgeschiedene und bis auf eine Restfeuchte von 0,8% getrocknete Mg(OH)$_2$ wurde in einem Zyklonwärmetauscher bei einer Materialtemperatur im Calcinator von 670°C dehydratisiert (Restglühverlust 0,55%). Das in den Zwischenbehälter vor der Brikettierpresse einlaufende Calcinat hatte folgende Kornzusammensetzung:

Rückstand 0,5 mm = 3,7%
Rückstand 0,2 mm = 14,7%
Rückstand 0,09 mm = 27,0%

Die Materialtemperatur bei der Brikettierung lag zwischen 590 und 630°C. Es wurden Brikettdichten zwischen 1,98 und 2,12 g/cm$^3$ erzielt. Der Dichtbrand der Briketts erfolgte in einem ölbefeuerten Drehrohrofen. Die Temperatur in der heißesten Ofenzone lag bei 1930°C. Die Wärmebehandlung im Drehrohrofen dauerte ca. 6,5 bis 7,5 Stunden. Es wurde eine Enddichte von durchschnittlich 3,34 g/cm$^3$ erreicht.

Beispiel 2

Ausgangsmaterial: Filterkuchen (MgO = 98,3%, bezogen auf glühverlustfrei) aus der Saugfiltration mit 48% Feuchte

Vermischung mit Schachttrocknergrießen (2% Feuchte) im Walzenkollergang wie folgt:

65,2% Filterkuchen (feucht)
34,8% Schachttrocknergieße
32,0% Mischfeuchte

Die Gastemperatur am Schachttrocknereintritt betrug 820°C. Als Trocknungsgase fanden 400°C heiße Abgase des Zyklonwärmetauschers und 980°C heiße Gase aus einer Brennkammer Verwendung.

Es ergab sich folgende Feinheit des Gutes nach dem Schachttrockner:

Rückstand 0,5 mm = 3,0%
Rückstand 0,2 mm = 7,4%
Rückstand 0,09 mm = 18,0%

Die Feinheit nach dem Zyklonwärmetauscher war wie folgt:

Kornanalyse   R 0,5 mm = 3,7%
      R 0,2 mm = 14,7%
      R 0,09 mm = 27,0%

R 0,5 mm bedeutet Rückstand auf Sieb mit Maschenweite 0,5 mm.

Die Materialtemperatur im Calcinator betrug 720°C (Restglühverlust 0,75%).

Die Brikettiertemperatur betrug 610 bis 760°C. Die Brikettdichte lag bei 1,95 bis 2,05 g/cm$^3$.

Die Sinterung im Drehrohrofen erfolgte bei 1900 bis 1920°C bei einer Gesamtverweilzeit im Drehrohrofen von 6 bis 7 Stunden. Es wurde eine Dichte des Sinters von durchschnittlich 3,32 g/cm$^3$ erzielt.

**Patentansprüche**

1. Verfahren zur Herstellung von Sintermagnesit aus Magnesiumhydroxid, wobei zunächst eine Magnesiumhydroxid-Suspension durch Filtration entwässert wird, das so gewonnene Aufgabegut in einer Wärmebehandlungszone calciniert wird, der so gewonnene Kauster unter Druck brikettiert wird und die Briketts schließlich in einer Sinterzone bei einer Temperatur von 1800 bis 2000°C gesintert werden, gekennzeichnet durch folgende Merkmale:

a) Es wird zunächst ein mechanisch festes Aufgabegut mit einem Feuchtegehalt unter dem Thixotropiewert und mit einem Raumgewicht zwischen 1,3 und 1,4 g/cm$^3$ erzeugt;

b) dieses Aufgabegut wird anschließend in einer Mahltrocknungsstufe im Heißluftstrom getrocknet und gleichzeitig so zerkleinert, daß die Kornverteilung im schraffierten Bereich des Körnungsnetzes gemäß Fig. 2 liegt;

c) das durch Trocknung und Zerkleinerung gewonnene pulverförmige Gut wird dann in einem Schwebegaswärmetauscher mit den heißen Abgasen der Sinterzone erhitzt und durch eine dosierte Zufuhr von zusätzlichem Brennstoff im Gasstrom bei kurzer Verweilzeit und einer Temperatur zwischen 650 und 1050°C calciniert;

d) der Kauster wird bei einer Temperatur von 400 bis 800°C heißbrikettiert und die so gewonnenen Briketts werden im heißen Zustand in die Sinterzone eingetragen.

2. Verfahren nach Anspruch 1, dadurch gekennzeichnet, daß das Aufgabegut durch Grobzerkleinerung von mittels Röhrenfilter-Druck-Filtration gewonnenem Filterkuchen auf eine Stückgröße < 100 mm erzeugt wird.

3. Verfahren nach Anspruch 1, dadurch gekennzeichnet, daß das Aufgabegut durch Vermischung von mittels Saugfiltration oder Rahmenfilter-Druckfiltration gewonnenem Filterkuchen mit getrocknetem oder teilgetrocknetem, feinkörnigen Magnesiumhydroxid, vorzugsweise in einem Zwangsmischer mit knetend-reibender Behandlung, erzeugt wird.

4. Anlage zur Durchführung des Verfahrens nach Anspruch 1, dadurch gekennzeichnet, daß zur Trocknung und Zerkleinerung des Aufgabegutes ein von heißen Abgasen des Schwebegas-Wärmetauschers (2) durchströmter vertikaler Trocknungsschacht (6) mit einem am unteren Schachtende angeordneten Desintegrator (7) und einem im oberen Schachtbereich angeordneten Abscheider (8) vorgesehen ist.

5. Anlage nach Anspruch 4, dadurch gekennzeichnet, daß zur Wärmebehandlung des durch Trocknung und Zerkleinerung gewonnenen pulverförmigen Gutes ein zweistufiger Zyklonwärmetauscher (2) vorgesehen ist, dessen von der Sinterstufe (5) zur untersten Zyklonstufe (17) führende Gasleitung (21) einen schwanenhalsähnlich ausgebildeten Brennraum zur Calcinierung des Gutes aufweist.

6. Anlage nach Anspruch 5, dadurch gekennzeichnet, daß zwischen der untersten Stufe (17) des Zyklonwärmetauschers (2) und einer Brikettierpresse (4) ein thermisch isolierter Zwischenbehälter (25) vorgesehen ist.

7. Anlage nach Anspruch 5, dadurch gekennzeichnet, daß die unterste Stufe (17) des Zyklonwärmetauschers (2) einen so hohen Abscheidegrad aufweist, daß das im Heißgasstrom des Calcinier-Brennraumes enthaltene pulverförmige Gut in dieser untersten Stufe des Zyklonwärmetauschers nahezu vollständig abgeschieden wird.

## Claims

1. Method of producing sintered magnesite from magnesium hydroxide, in which first of all a magnesium hydroxide suspension is dehydrated by filtration, the product thus obtained is calcined in a heat treatment zone, the calcined material thus obtained is briquetted under pressure and finally the briquettes are sintered in a sintering zone at a temperature of 1800 to 2000° C, characterised by the following features:

a) first of all a mechanically strong product is obtained with a moisture content below the thixotropy value and a density between 1.3 and 1.4 g/cm³;

b) this product is then dried in a hot air current in a grinding zone and simultaneously crushed so that the grain size distribution lies in the hatched range of the granulation grid according to Figure 2;

c) the powder material obtained by drying and crushing is then heated in a suspended gas heat heat exchanger with the hot exhaust gases from the sintering zone and calcined by the delivery of a measured quantity of additional fuel in the gas current with a short period of dwell and at a temperature between 650 and 1050° C;

d) the calcined material is briquetted at a temperature of 400 to 800° C and the briquettes thus produced are introduced in the hot state into the sintering zone.

2. Method as claimed in claim 1, characterised in that the products is produced by coarse crushing of filter cakes obtained by pressure filtration in a pipe filter to a particle size <100 mm.

3. Method as claimed in claim 1, characterised in that the product is produced by mixing filter cakes obtained by suction filtration or pressure filtration in a frame filter with dried or partially dried fine-grained magnesium hydroxide, preferably in a force mixer with kneading and abrasive treatment.

4. Apparatus for carrying out the method as claimed in claim 1, characterised in that in order to dry and crush the product a vertical drying shaft (6) through which hot exhaust gases from the suspended gas heat exchanger (2) flow is provided with a disintegrator (7) arranged at the lower end of the shaft and a separator (8) in the upper region of the shaft.

5. Apparatus as claimed in claim 4, characterised in that for the heat treatment of the powder material obtained by drying and crushing a two-stage cyclone heat exchanger (2) is provided in which the gas conduit (21) leading from the sintering stage (5) to the lowest cyclone stage (17) has a combustion chamber of swan-neck construction for calcination of the material.

6. Apparatus as claimed in claim 5, characterised in that a thermally insulated intermediate container (25) is provided between the lowest stage (17) of the cyclone heat exchanger (2) and a briquetting press (4).

7. Apparatus as claimed in claim 5, characterised in that the lowest stage (17) of the cyclone heat exchanger (2) has such a high degree of separation that the powder material contained in the hot gas current of the calcination combustion chamber is almost completely eliminated in this lowest stage of the cyclone heat exchanger.

## Revendications

1. Procédé de préparation de magnésite frittée à partir d'hydroxyde de magnésium, procédé suivant lequel une suspension d'hydroxyde de magnésium est tout d'abord asséchée par filtration, la charge ainsi obtenue est calcinée dans une zone de traitement thermique, le produit calciné ainsi obtenu est aggloméré sous pression et finalement les agglomérés passent dans une zone de frittage à une température de 1800 à 2000° C, procédé caractérisé par les particularités suivantes:

a) une charge ayant de la résistance mécanique est tout d'abord produite avec une teneur en humidité inférieure à celle de la thixotropie et avec un poids spécifique compris entre 1,3 et 1,4 g/cm³;

b) cette charge est ensuite asséchée dans un courant d'air chaud dans un étage de broyage avec séchage et elle est simultanément fractionnée de manière que sa granulométrie se trouve dans la partie hachurée du graphique de la figure 2;

c) le produit pulvérulent obtenu par séchage et fractionnement subit ensuite un échauffement dans un échangeur de chaleur à suspension dans un gaz au moyen des gaz d'échappement chauds de la zone de frittage, puis il subit la calcination à une température comprise entre 650 et 1050° C par addition dosée d'un complément de combustible au courant gazeux et avec une faible durée de contact;

d) le produit calciné est aggloméré à chaud à une température de 400 à 800°C, puis les agglomérés ainsi obtenus sont introduits à l'état chaud dans la zone de frittage.

2. Procédé selon la revendication 1, caractérisé en ce que la charge est produite par fractionnement grossier, en morceaux d'une grosseur inférieure à 100 mm, d'un gâteau de filtre-presse obtenu par filtration sous pression au moyen d'un filtre tubulaire.

3. Procédé selon la revendication 1, caractérisé en ce que la charge est produite par mélange d'un gâteau de filtre-presse, obtenu par filtration à aspiration ou par filtration à pression au moyen d'un filtre à cadres et plateaux, avec de l'hydroxyde de magnésium sec ou partiellement séché, à granulométrie fine, de préférence dans un malaxeur à mélange forcé et à traitement de pétrissage et de friction.

4. Installation pour la mise en oeuvre du procédé selon la revendication 1, caractérisé en ce qu'elle comprend, pour le séchage et le fractionnement de la charge, une cuve de séchage verticale (6) balayée par les gaz d'échappement chauds de l'échangeur de chaleur à suspension dans un gaz (2), un désintégrateur (7) étant disposé à l'extrémité inférieure de la cuve et un séparateur (8) étant disposé dans le haut de cette cuve.

5. Installation selon la revendication 4, caractérisée en ce qu'elle comprend, pour le traitement thermique du produit pulvérulent obtenu par séchage et fractionnement, un échangeur de chaleur (2) à cyclone et à deux étages, la canalisation (21) memant les gaz de l'étage de frittage (5) à l'étage inférieur (17) du cyclone comprenant une chambre de combustion en col de cygne destinée à la calcination du produit.

6. Installation selon la revendication 5, caractérisée en ce qu'un distributeur (25) comportant une isolation thermique est disposé entre l'étage inférieur (17) de l'échangeur de chaleur à cyclone (2) et une presse d'agglomération (4).

7. Installation selon la revendication 5, caractérisée en ce que le taux de séparation est suffisamment élevé dans l'étage inférieur (17) de l'échangeur de chaleur à cyclone (2) pour que le produit pulvérulent obtenu dans le courant de gaz chaud de la chambre de combustion destinée à la calcination soit pratiquement extrait en totalité dans cet étage inférieur du cyclone.

FIG.1

FIG. 2